# EUROPÄISCHE PATENTSCHRIFT

(11) **EP 2 039 632 B1**
(45) Veröffentlichungstag und Bekanntmachung des Hinweises auf die Patenterteilung: **03.03.2010**
(21) Anmeldenummer: 08015817.3
(22) Anmeldetag: 09.09.2008
(51) Int. Cl.: B65G 47/90

(54) **Vorrichtung zur Aufnahme und zum Transport eines Gutes**
Device for storing and transporting an article
Dispositif de réception et de transport d'une marchandise

(30) Priorität: 13.09.2007 DE 102007045042
(43) Veröffentlichungstag der Anmeldung: 25.03.2009
(73) Patentinhaber: Multivac Sepp Haggenmüller GmbH & Co. KG, 87787 Wolfertschwenden (DE)
(72) Erfinder: Mayer, Steffen, 71277 Rutesheim (DE); Binder, Jan, 73732 Esslingen (DE); Unmuth, Thomas, 70565 Stuttgart (DE)
(74) Vertreter: Grünecker, Kinkeldey, Stockmair & Schwanhäusser Anwaltssozietät

(56) Entgegenhaltungen:
- EP-A- 1 767 477
- WO-A-99/00306
- WO-A-2007/093774
- DE-A1- 19 847 932

## Beschreibung

Die Erfindung betrifft eine Vorrichtung zur Aufnahme und zum Transport eines Gutes nach dem Oberbegriff des Anspruchs 1.

Aus dem Stand der Technik, z.B. aus der Druckschrift US 4,746,255 A, sind Vorrichtungen zur Aufnahme und zum Transport eines Gutes bekannt, die eine Aufnahmeplatte aufweisen, die unter das Gut geschoben wird. Die Aufnahmeplatte ist hierbei von einem Band umgeben, das an einer Halterung befestigt ist, so dass sich bei Verschiebung der Aufnahmeplatte die Halterung nicht mit dieser mitbewegt und der Bereich des Bandes, auf dem das Gut aufliegt, bei Verschiebung der Aufnahmeplatte unter das Gut seine Position relativ zu dem Gut beibehält.

Aus der Druckschrift WO2007/093774 A1 ist ein Vorrichtung zur Aufnahme und zum Transport eines Gutes gemäß dem Oberbegriff des Anspruch 1 bekannt.

Aufgabe der Erfindung ist es, eine Vorrichtung nach dem Stand der Technik dahingehend zu verbessern, dass das Gut während des Transports der Vorrichtung besser auf den Aufnahmeplatten aufliegt.

Diese Aufgabe wird ausgehend von einer Vorrichtung nach dem Oberbegriff des Anspruchs 1 durch dessen kennzeichnende Merkmale gelöst.

Ein Niederhalterelement ist vorgesehen, das das Gut auf wenigstens eine Aufnahmeplatte niederhält.

Erfindungsgemäß ist ein elastisches Band an mindestens einem sich mit der Aufnahmeplatte bewegenden Bauteil und an mindestens einem sich nicht mit der Aufnahmeplatte bewegenden Bauteil angebracht, so daß das elastische Band während der Verschiebung der Aufnahmeplatte unter das Gut, wenigstens einen schlaufenartigen Bereich bildet, der das Gut niederhält.

Diese Ausbildung des Niederhalterelements vermindert zum einen die Verrutschungsgefahr bei Bewegung der Vorrichtung, wobei die Absenkung des Bandes simultan mit der Bewegung der Aufnahmeplatten erfolgt und das Gut erst während der letzten Phase der Aufeinanderzubewegung der Aufnahmeplatten, d.h. zu einem Zeitpunkt, in dem das Gut praktisch bereits weitestgehend auf den Aufnahmeplatten aufliegt, berührt. Dieses leichte elastische Andrücken des Gutes an die Aufnahmeplatte bzw. die Aufnahmeplatten ist darüber, hinaus besonders schonend für das zu transportierende Gut.

Auf diese Weise ist das Gut besser fixiert und kann insbesondere bei Beschleunigungen der Vorrichtungen nicht verrutschen.

In den Unteransprüchen sind vorteilhafte Ausführungen und Weiterbildungen der Erfindung angegeben.

In einer Weiterbildung der Erfindung ist das elastische Band etwa mittig oberhalb des Gutes an einer Halterung befestigt, so dass sich bei Verschiebung einer Aufnahmeplatte ein schlaufenartiger Bereich und bei Verschiebung zweier Aufnahmeplatten zwei schlaufenartige Bereiche bilden. Auf diese Weise ergibt sich ein Niederhalterelement, das bei jeder Aufnahmeplatte dort an dem Gut zum Angriff kommt, wo auf der Unterseite eine Aufnahmeplatte vorgesehen ist.

Vorteilhafterweise wird die mindestens eine Aufnahmeplatte von einem Band umgeben, das an einer Halterung befestigt ist, die sich bei Verschiebung der Aufnahmeplatte nicht mit dieser mitbewegt, so dass bei Verschiebung der Aufnahmeplatte unter das Gut der Bereich des Bandes, auf dem das Gut aufliegt, seine Position relativ zu dem Gut beibehält.

Das die Aufnahmeplatte umgebende und sich beim Untergreifen des Gutes gegenüber den Aufnahmeplatten verschiebende Band führt während des Untergreifens, d.h. während sich die Aufnahmeplatte unter das aufzunehmende Gut schiebt, mit seinem oberen Bereich, auf dem das Gut aufliegt, somit gegenüber dem aufzunehmenden Gut keine Relativbewegung aus, während sich das Band von unten, also in seinem Bereich unterhalb der Aufnahmeplatte, unter dieser verschiebt und sich dabei auch von unten unter das Gut schiebt, es um den Betrag der Dicke des Bandes und der Aufnahmeplatte hochhebt, jedoch ohne mit seinem oberen Bereich auf das aufzunehmende Gut eine Reibungskraft auszuüben, die es zusammendrücken oder sonst wie beeinträchtigen kann.

In einer Weiterbildung der Erfindung werden die Aufnahmelatten gegenüber der Aufnahmefläche schräg gestellt, so dass die Bänder nur entlang des Umlenkungsbereichs um die Kanten der Aufnahmeplatten auf der Aufnahmefläche gleiten. Hierdurch wird die Gleitreibung zwischen dem Band und der Aufnahmefläche, von der das Gut aufgenommen wird, erheblich reduziert.

Ferner ist es möglich, die Reibung zwischen den Kanten der Aufnahmeplatten und den Bändern zu mindern, indem an den Kanten reibungsarme Mittel vorgesehen werden. Durch die Verminderung der Reibung, die auf die Bänder wirkt, kann die Belastung und somit der Verschleiß der Bänder reduziert werden.

Ein Ausführungsbeispiel der Erfindung ist in der Zeichnung dargestellt und wird anhand der Figuren nachfolgend näher erläutert.

Im Einzelnen zeigen
- Figur 1: eine Seitenansicht einer erfindungsgemäßen Vorrichtung vor dem Aufnehmen eines Gutes,
- Figur 2: eine Seitenansicht einer Vorrichtung gemäß Figur 1 während des Aufnehmen des Gutes,
- Figur 3: eine Ausführungsform der Erfindung mit aufgenommenem Gut und
- Figur 4: eine Detaildarstellung einer weiteren Ausführungsform der Erfindung in der Seitenansicht.

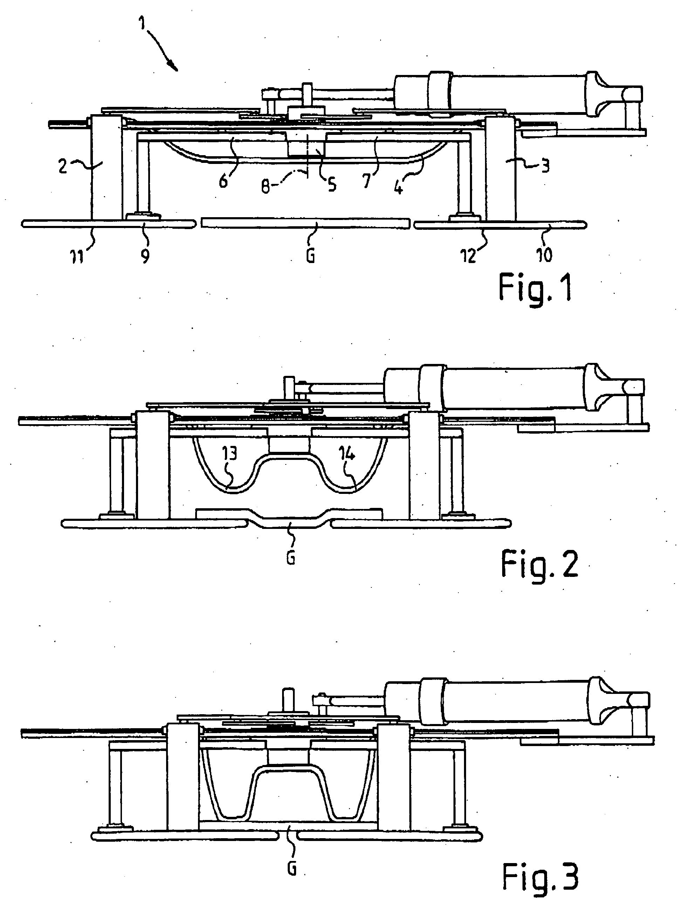

In einer Vorrichtung 1 gemäß Figur 1 sind zwei Bügel 2, 3 vorgesehen, an denen ein elastisches Band 4 befestigt ist. Dieses ist außerdem an dem sich nicht verschiebenden Teil 5 in Verbindung zwischen zwei Streben 6, 7 mittels einer Schraube 8 befestigt. Bewegen sich die beiden Aufnahmeplatten 9, 10, um die jeweils ein Band 11, 12 zur Kompensation einer Relativbewegung zwischen den Aufnahmeplatten 9, 10 und dem Gut G bei der Aufnahme des Gutes G angebracht sind, aufeinander zu, so senken sich die beiden schlaufenartigen Bereiche 13, 14 des elastischen Bandes 4 auf die äußeren Bereiche des Gutes G ab (vgl. Figur 2).

Die Absenkung bis zur Berührung erfolgt erst während der letzten Phase der Aufeinanderzubewegung der Aufnahmeplatten 9, 10, d.h. zu einem Zeitpunkt, in dem das Gut G praktisch bereits weitestgehend auf den Aufnahmeplatten aufliegt. Das leicht elastische Andrücken des Gutes G an die Aufnahmeplatten verhindert während des Transports der Vorrichtung 1 ein Verrutschen des Gutes G.

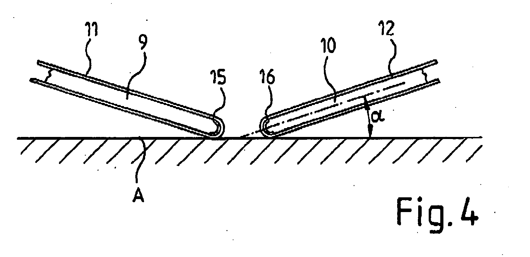

In der besonderen Ausführungsform gemäß Figur 4 ist die Anordnung der Aufnahmeplatten 9, 10 mit den zu umgebenden Bändern 11, 12 dahingehend modifiziert, dass die Aufnahmeplatten 9, 10 gegenüber der Aufnahmefläche A, von der das Gut G aufgenommen werden soll, schräg gestellt sind, so dass die Bänder 11, 12 nur entlang des Umlenkungsbereiches um die Kanten 15, 16 auf der Aufnahmefläche A gleiten. Der Winkel a liegt vorzugsweise in einem Bereich von 1 - 15°.

Im dargestellten Ausführungsbeispiel sind zwei Aufnahmeplatten 9, 10 vorgesehen. Die erfindungsgemäße Vorrichtung 1 kann jedoch auch mit nur einer Aufnahmeplatte arbeiten, wobei das Niederhalterelement wiederum durch das elastische Band 4 mit entsprechender Modifikation gebildet werden kann, so dass sich nur ein schlaufenartiger Bereich 13 oberhalb der zugehörigen Aufnahmeplatte 9 bildet.

### Bezugszeichenliste:

- 1: Vorrichtung
- 2: Bügel
- 3: Bügel
- 4: elastisches Band
- 5: Verbindung
- 6: Strebe
- 7: Strebe
- 8: Schraube
- 9: Aufnahmeplatte
- 10: Aufnahmeplatte
- 11: Band
- 12: Band
- 13: schlaufenartiger Bereich
- 14: schlaufenartiger Bereich

## Patentansprüche

1. Vorrichtung zur Aufnahme und zum Transport eines Gutes (G), die mindestens eine Aufnahmeplatte (9, 10) aufweist, die unter das Gut (G) geschoben wird, wobei ein Niederhalterelement vorgesehen ist, das das Gut auf wenigstens einer Aufnahmeplatte niederhält,'**dadurch gekennzeichnet, dass** ein elastisches Band (4) an mindestens einem sich mit der Aufnahmeplatte (9, 10) bewegenden Bauteil (2, 3) und an mindestens einem sich nicht mit der Aufnahmeplatte (9, 10) bewegenden Bauteil (5) angebracht ist , so daß das elastiche Band während der Verschiebung der Aufnahmeplatte (9, 10) unter das Gut (G) wenigstens einen schlaufenartigen Bereich (13, 14) bildet, der das Gut (G) niederhält.

2. Vorrichtung nach Anspruch 1, **dadurch gekennzeichnet, dass** das elastische Band (4) etwa mittig oberhalb des Gutes (G) an einer Halterung (5) befestigt ist und bei Verschiebung einer Aufnahmeplatte zwei schlaufenartige Bereiche (13, 14) bildet.

3. Vorrichtung nach Anspruch 1, **dadurch gekennzeichnet, dass** die mindestens eine Aufnahmeplatte (9, 10) von einem Band (11, 12) umgeben ist, das an einer Halterung befestigt ist, die sich bei Verschiebung der Aufnahmeplatte (9, 10) nicht mit dieser mitbewegt, so dass bei Verschiebung der Aufnahmeplatte (9, 10) unter das Gut (G) der Bereich des Bandes, auf dem das Gut (G) aufliegt, seine Position relativ zu dem Gut (G) beibehält.

4. Vorrichtung nach einem der vorgenannten Ansprüche, **dadurch gekennzeichnet, dass** die Aufnahmeplatte (9, 10) gegenüber der Fläche (A), auf der das Gut (G) aufliegt, schräg geneigt ist, vorzugsweise mit einem Winkel (α) von 1 - 15°.

5. Vorrichtung nach einem der vorgenannten Ansprüche, **dadurch gekennzeichnet, dass** an der Kante (15, 16) der Aufnahmeplatte (9, 10) reibungsmindernde Mittel vorgesehen sind.

6. Vorrichtung nach einem der vorgenannten Ansprüche, **dadurch gekennzeichnet, dass** zwei durch von je einem Band (11, 12) umgebene Aufnahmeplatten (9, 10) vorgesehen sind, die bei Verschiebung aufeinander zu und voneinander weg bewegt werden.

## Claims

1. Device for storing and transporting an article (G), comprising at least one receiving plate (9, 10) which is slid beneath the article (G), a retaining member being provided which holds the article in place on at least one receiving plate, **characterised in that** a resilient strap (4) is attached to at least one component (2, 3) moving with the receiving plate (9, 10) and to at least one component (5) not moving with the receiving plate (9, 10), in such a way that when the receiving plate (9, 10) is displaced beneath the article (G), the resilient strap forms at least one tubular region (13, 14) which retains the article (G).

2. Device according to claim 1, **characterised in that** the resilient strap (4) is fixed approximately centrally above the article (G) to a mount (5) and forms two tubular regions (13, 14) when a receiving plate is displaced.

3. Device according to claim 1, **characterised in that** the at least one receiving plate (9, 10) is surrounded by a strap (11, 12) fixed to a mount, which does not move with the receiving plate (9, 10) when said receiving plate is displaced, in such a way that when the receiving plate (9, 10) is displaced beneath the article (G), the region of the strap on which the article (G) is arranged maintains its position relative to the article (G).

4. Device according to any one of the preceding claims, **characterised in that** the receiving plate (9, 10) is inclined obliquely relative to the surface (A) on which the article (G) is arranged, preferably at an angle (α) of 1 to 15°.

5. Device according to any one of the preceding claims, **characterised in that** friction-reducing means are provided on the edge (15, 16) of the receiving plate (9, 10).

6. Device according to any one of the preceding claims, **characterised in that** two receiving plates (9, 10) are provided which are each surrounded by a strap (11, 12) and are moved towards and away from one another during displacement.

## Revendications

1. Dispositif de réception et de transport d'un produit (G), comportant au moins un plateau de réception (9, 10) qui est poussé en dessous du produit (G), un élément de retenue étant prévu pour maintenir ledit produit sur au moins un plateau de réception, **caractérisé en ce qu'**une bande élastique (4) est attachée à au moins un élément (2, 3) se déplaçant avec le plateau de réception (9, 10) et à au moins un élément (5) ne se déplaçant pas avec le plateau de réception (9, 10), de telle sorte que la bande élastique, au moment du glissement du plateau de réception (9, 10) en dessous du produit (G), forme au moins une zone (13, 14) en forme de boucle qui maintient le produit (G).

2. Dispositif selon la revendication 1, **caractérisé en ce que** la bande élastique (4) est fixée à peu près au milieu au-dessus du produit (G) contre une fixation (5) et, lors du déplacement d'un plateau de réception, forme deux zones (13, 14) en forme de boucle.

3. Dispositif selon la revendication 1, **caractérisé en ce que** ledit au moins un plateau de réception (9, 10) est entouré par une bande (11, 12), qui est fixée à une fixation qui, pendant le déplacement du plateau de réception (9, 10), ne se déplace pas avec celui-ci, de telle sorte que, au moment du glissement du plateau de réception (9, 10) en dessous du produit (G), la zone de la bande, sur laquelle est posé le produit (G), garde sa position par rapport au produit (G).

4. Dispositif selon l'une quelconque des revendications précédentes, **caractérisé en ce que** le plateau de réception (9, 10) est incliné, de préférence avec un angle (α) de 1 à 15° par rapport à la surface (A), sur laquelle est posé le produit (G).

5. Dispositif selon l'une quelconque des revendications précédentes, **caractérisé en ce que** des moyens diminuant le frottement sont prévus sur le bord (15, 16) du plateau de réception (9, 10).

6. Dispositif selon l'une quelconque des revendications précédentes, **caractérisé en ce qu'**il est prévu deux plateaux de réception (9, 10), qui sont entourés chacun par une bande (11, 12) et qui, pendant le déplacement, sont déplacés l'un vers l'autre et sont éloignés l'un de l'autre.
